# EUROPEAN PATENT APPLICATION

(11) **EP 3 664 446 A1**
(43) Date of publication of application: **10.06.2020**
(21) Application number: 17924279.7
(22) Date of filing: 06.09.2017
(51) Int. Cl.: H04N 13/00, H04L 12/853, H04N 21/2343, H04N 21/262, H04N 21/2662, H04N 5/38

(54) **METHOD AND DEVICE FOR TRANSMITTING WIRELESS DATA**

(71) Applicant: SZ DJI Technology Co., Ltd., Shenzhen, Guangdong 518057 (CN)
(72) Inventor: ZHU, Lei, Shenzhen Guangdong 518057 (CN)
(74) Representative: Goddar, Heinz J.
(86) International application number: PCT/CN2017/100700
(87) International publication number: WO 2019/047058

(57) **Abstract**

A video data processing method is provided. The method includes time down-sampling an image sequence to form multiple subsequences, encoding the multiple subsequences to form multiple encoded subsequences, and selecting frames to be transmitted according to sizes of respective frames in the multiple encoded subsequences and a bandwidth of each channel of the multiple channels. There is also provided an unmanned aerial vehicle and a computer-readable storage medium.

## Description

### TECHNICAL FIELD

The present disclosure relates to wireless data transmission technology field and, more particularly, to a wireless data transmission method and device.

### BACKGROUND

Currently, how to use a wireless channel to transmit video with low latency when the wireless channel or a channel bandwidth changes in real time is a hot topic of research and application. A multi-link channel can use multiple data transmission channels to achieve the purpose of expanding communication bandwidth.

Under the conditions of multi-link wireless and unreliable channels, a matching source coding scheme needs to be provided to increase the reliability of video transmission and improve the quality of video transmission. In current multi-link aggregation transmission, multiple links are mainly used for bandwidth expansion. The transmitting end performs packetization processing on encoded code stream data and distributes the data to different links for transmission. The receiving end reorganizes the transmitted data and then decodes it to obtain the desired data.

However, the current solution only utilizes the bandwidth extension of multiple links and does not utilize multiple links for fault tolerance and improve transmission reliability. For example, once an error occurs in data transmission on a data link, the image decoded by the receiving end will be in error, and the error will spread due to the dependency of the data before and after compression. At this point, error recovery must be done through fault tolerant frames or other fault tolerant schemes. For example, suppose the code stream of one image frame is divided into 4 links for transmission. If the data is directly split, as long as the data transmission on one link is wrong, even the data transmission on the other three links is correct, the resulting frame data is wrong, and this error may lead to incorrect image with subsequent decoding, and a fault tolerant scheme must be used for error recovery.

### SUMMARY

To solve at least some of the above-noted problems, the present disclosure provides a technical solution that provides more reliable video compression and diversity transmission using multiple links. Using this technical solution, the receiving end only needs to aggregate the correctly received data from the multiple links to obtain decoded image. The more there are correct transmission links, the higher the decoded image quality is. The error recovery strategy needs to be initiated only if the data transmission of a certain frame on all links is wrong. In addition, in the technical solution of the present disclosure, it can be considered that there is no obvious static capability difference among the links, so the compression scheme can adopt a uniform strategy to ensure that the data on each link has similar importance.

In accordance with the disclosure, there is provided a video data processing method. This method includes time down-sampling an image sequence to form multiple subsequences, encoding the multiple subsequences separately to form multiple encoded subsequences, and determining frames to transmit according to sizes of frames in the multiple encoded subsequences and the bandwidth of each of the multiple channels.

In one embodiment, an oldest frame is found from each of the encoded subsequences, and these frames are combined to form a group, and the operations are sequentially repeated to form multiple groups. Then, the frames in each group that are to be transmitted are determined according to the sizes of the frames in each group and the bandwidth of each channel of the multiple channels.

In one embodiment, the frames in each group that are to be transmitted can be selected according to the following condition:
S≤T
where S is a total code stream size of the selected frames in the group and T is a total bandwidth of the multiple channels.

In another embodiment, the frames in each group that are to be transmitted can be selected according to the following condition:
T-D≤S≤T+D
where S is the total code stream size of the selected frames in the group, T is the total bandwidth of the multiple channels, and D is a tolerance threshold.

Preferably, as many frames as possible in each group are selected for transmission.

Preferably, the multiple channels are sorted in a descending order of bandwidth, and the frames to be transmitted in each group are sorted in an ascending order. Then, the sorted frames are sequentially matched with the sorted channels, so that as many frames as possible in each group are transmitted in the same channel.

Also in accordance with the disclosure, there is provided an unmanned aerial vehicle (UAV), including an imaging device, a processor, and a transmission circuit. The imaging device is configured to capture an image sequence. The processor is configured to time down-sample the image sequence to form the multiple subsequences. The processor is also configured to separately encode the multiple subsequences to form the encoded multiple subsequences. The processor is also configured to select the frames to be transmitted according to the sizes of the frames in the multiple encoded subsequences and the bandwidth of each channel of the multiple channels. The transmission circuit is configured to transmit the selected frames.

Also in accordance with the disclosure, there is provided a computer-readable storage medium storing a computer program. The computer program, when executed by at least one processor, causes the at least one processor to perform the following operations: time down-sampling an image sequence to form multiple subsequences, encoding the multiple subsequences separately to form multiple encoded subsequences, and determining fames to be transmitted according to sizes of frames in the multiple encoded subsequences and bandwidth of each channel in the multiple channels.

The reliability of the multi-link transmission scheme can be improved by adopting the technical solution of the present disclosure. That is, when one or more links for the multi-link transmission are in error, a reconstructed image without decoding errors can still be obtained. In addition, the more data are received correctly from the links, the higher the quality of the final reconstructed image is. The maximum quality of the reconstructed image can be obtained when the data on all links is received correctly.

### BRIEF DESCRIPTION OF THE DRAWINGS

The above and other features of the present disclosure will become more apparent from the following detailed description with reference to the drawings, where:
FIG. 1 is a schematic flow chart of a method according to an example embodiment of the disclosure.
FIG. 2 is a schematic view showing time down-sampling an image sequence according to an example embodiment of the disclosure.
FIG. 3 is a block diagram of an unmanned aerial vehicle according to an example embodiment of the disclosure.
FIG. 4 is a block diagram of a computer-readable medium according to an example embodiment of the disclosure.

### DETAILED DESCRIPTION OF THE EMBODIMENTS

Technical solutions of the present disclosure will be described with reference to the drawings. It should be noted that the present disclosure should not be limited to the specific embodiments described below. In addition, detailed descriptions of well-known techniques not directly related to the present disclosure are omitted for the sake of brevity to prevent confusion in the understanding of the present disclosure.

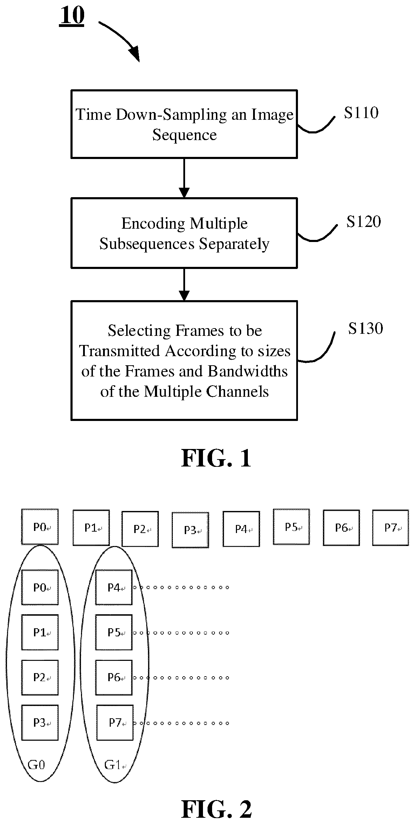

FIG. 1 is a schematic flow chart of a method 10 according to an example embodiment of the disclosure.

As shown in FIG. 1, at S110, an image sequence including multiple frames is time down-sampled to form multiple subsequences.

FIG. 2 is a schematic view showing the time down-sampling of the image sequence according to an example embodiment. As shown in FIG. 2, the original image sequence (P0, P1, ..., P7, ...) is divided into 4 subsequences. The first subsequence includes frames P0, P4, P8, ..., the second subsequence includes frames P1, P5, P9, ..., the third subsequence includes frames P2, P6, P10, ..., and the fourth subsequence includes frames P3, P7, P11, .... Thus, four video subsequences with a temporal resolution of 1/4 of the original video sequence are obtained.

It should be noted that the four subsequences shown in FIG. 2 are only one specific example. The present disclosure is not limited to dividing the original image sequence into 4 subsequences, but the original image sequence may be divided into more or fewer subsequences according to actual needs. For example, the original image sequence (P0, P1, ...) can be divided into 6 subsequences. The first subsequence includes frames P0, P6, P12, ..., the second subsequence includes frames P1, P7, P13, ..., the third subsequence includes frames P2, P8, P14, ..., the forth subsequence includes frames P3, P9, P15, ..., the fifth subsequence includes frames P4, P10, P16, ..., and the sixth subsequence includes frames P5, P11, P17, .... Thus, six video subsequences with a temporal resolution of 1/6 of the original video sequence are obtained. Similarly, the original image sequence (P0, P1, ...) can also be divided into two subsequences, in which case the first subsequence includes frames P0, P2, P4, ..., and the second subsequence includes frames P1, P3, P5, ....

Referring again to FIG. 1, at S120, the multiple subsequences obtained at S110 are separately encoded (i.e., compressed) to form multiple encoded subsequences (encoded code streams). For example, for each subsequence, a corresponding encoder can be used for encoding. The outputs of multiple encoders are aggregated to form an encoded code stream. In addition, for the encoded code stream, corresponding multiple wireless links can be used for transmission, which will be described in more detail below.

Next, at S130, the encoded frames to be transmitted are selected according to the size of each frame (encoded frame) in the multiple encoded subsequences and the bandwidth of each channel of multiple channels.

According to an embodiment, when selecting a frame to be transmit, it is considered to transmit in units of groups (i.e., G0, G1, ... shown in FIG. 2). FIG. 2 as an example, the current frames of the four subsequences in a group can be combined for transmission based on the code stream size of the current frame of each subsequence in each group (G0, G1, ...) and the real-time channel estimation values of the multiple channels to, realize real-time matching to multiple wireless channels. In the following, one specific example is used to describe how to select a frame to be transmitted according to the size of the frame and the bandwidths of the multiple channels.

Assume that the code stream sizes of the four encoded frames P0, P1, P2, and P3 in group G0 are S0, S1, S2, and S3, respectively. In addition, it is assumed that there are currently three wireless channels with estimated bandwidths of T0, T1, and T2, respectively. Accordingly, the estimated value of the total bandwidth of the three wireless channels (i.e., the amount of transmittable data at the current group G0 time) is T (T = T0 + T1 + T2). Each value of T0-T2 may be predefined (e.g., based on historical values) or may be calculated using a channel bandwidth estimator. Further, it is assumed that the transmission and reception states of the current four subsequences are error-free, and the static capabilities of the three wireless channels are equivalent. Then:
(1) If S0+S1+S2+S3 <= T or the scenario has no requirements on delay, the code stream including the four encoded frames P0, P1, P2, and P3 can be transmitted by the three wireless channels T0-T2.
(2) Otherwise, one or more of S0, S1, S2, and S3 can be selected to make the total size of the combined code stream closest to T. Preferably, the code stream containing as many encoded frames as possible is selected under the premise that the total code stream size after combination is kept closest to T.

For example, in this scenario, if S0+S1 < S0+S2 < T is satisfied, then the code stream containing the encoded frames P0 and P2 is selected to be transmitted. Alternatively, if S0+S1 < T and S0+S2+S3 < T are satisfied, and the size of S0+S1 is about the same as the size of S0+S2+S3, in the code stream containing the encoded frames P0, P2, and P3 is transmitted.
(3) For application scenarios with strict requirements on delay, the combined data size should be smaller than T. For an application scenario that has a certain tolerance for delay jitter, the encoded frames are selected for transmission and matched with channels with the data size of the combined code stream satisfying T-D <= S <= T+D, where D is the tolerance threshold and S is the total size of the selected encoded frames. Preferably, under the premise of satisfying this condition, the code stream is selected containing as many encoded frames as possible.
(4) For application scenarios that balance transmission reliability, the situation that one code stream is assigned to multiple channels should be avoided where possible. In this respect, in one example, the multiple channels can be sorted in a descending order of bandwidth (greater bandwidth indicating better channel conditions), and the frames to be transmitted in each group are sorted in an ascending order of size. Then, the sorted frames are sequentially matched with the sorted channels, so that as many frames as possible in each group are transmitted in the same channel.

For example, for the example described above, T0-T2 can be sorted in a descending order (for example, T2>T1>T0). In addition, S0-S3 are sorted in an ascending order (for example, S0<SKS2<S3). When the frames to transmit are selected and matched with channels, for each Ti (starting from T0) of T0-T2, one or more Si are sequentially selected from S0-S3 for transmission, so that the total size of the selected one or more Si is smaller than Ti. If the remaining smallest Si is larger than the remaining largest Ti, dividing this Si for further transmission can be attempted (i.e., to put the Si in two or more of the remaining channels for transmission). Through this scheme, it is possible to ensure more streams to be transmitted, reduce the situation of one stream being assigned to multiple channels, and improve fault tolerance capability.

At the receiving end, the code stream of each subsequence in the group can also be received in units of groups. For example, when one or more of the frames P0, P1, P2, P3 in group G0 are correctly received, the correctly received subsequence image(s) can be used to restore the original image at the time position(s) thereof, but subsequence(s) with error are not used. Instead, for a subsequence with error, the original image at its corresponding time position can be restored by applying linear weighted interpolation to the correctly received reconstructed sequence, so that the final reconstructed image sequence is obtained.

In accordance with the embodiment, reconstructed image without decoding error can be obtained even when errors happen in one or more links of the multi-link transmission. In fact, the more data is received correctly from the links, the higher quality of the final reconstructed image is.

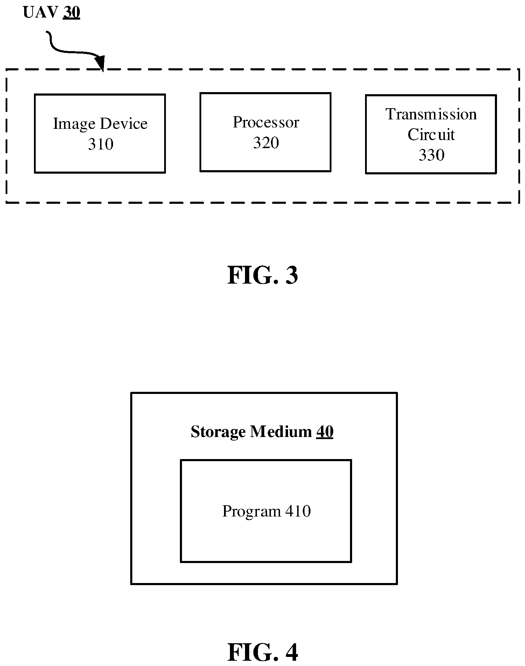

The technical solution of the present disclosure can be applied to an unmanned aerial vehicle (UAV). FIG. 3 is a block diagram of a UAV 30 according to an example embodiment of the present disclosure. As shown in FIG. 3, the UAV 30 includes an image device 310, a processor 320, and a transmission circuit 330.

The image device 310 is configured to capture an image sequence including multiple frames. For example, the image device 310 can include one or more cameras distributed at the UAV.

The processor 320 is configured to perform an operation on the image sequence including the multiple frames captured by the imaging device 310. Specifically, the processor 320 time down-samples the captured image including the multiple frames to form multiple subsequences. The processor 320 further encodes the formed multiple subsequences to form multiple encoded subsequences. In addition, the processor 320 selects the frame to be transmitted according to the sizes of the frames in the multiple encoded subsequences and the bandwidth estimated value of each channel of the multiple channels.

For example, the processor 320 can locate an earliest frame at the time position in each encoded subsequence and combine these encoded frames to form a group. The processor 320 repeats this operation sequentially to form multiple groups. And, the processor 320 selects the encoded frames to be transmitted from each group according to the sizes of the frames in each group and the bandwidth estimated value of each channel of the multiple channels.

For example, the processor 320 can select encoded frames in the groups to be transmitted according to the following condition:
S≤T.
where, S is a total code stream size of the selected encoded frames and T is a total bandwidth of multiple the channels. In some embodiments, the processor 320 selects as many encoded frames as possible in each group for transmission.

Alternatively, the processor 320 may select encoded frames in the group to be transmitted according to the following condition.
T-D≤S≤T+D.
where, S is the total code stream size of the selected encoded frames, T is the total bandwidth of multiple channels, and D is a tolerance threshold. Preferably, the processor 320 selects as many encoded frames as possible in each group for transmission.

Alternatively, the processor 320 can sort multiple channels in a descending order of bandwidth and sort frames to be transmitted in an ascending order of size. Further, the processor 320 may sequentially match the sorted frames with the sorted channels, so that as many frames as possible in each group are transmitted in the same channel.

The transmission circuit 330 is configured to transmit the frames selected by the processor 320. For example, the transmission circuit 330 can include wireless communication module using multiple wireless communication technologies (e.g., cellular communication, Bluetooth, WiFi, ...).

The UAV according to embodiments of the present disclosure can select the data to be transmitted and match the conditions of multiple wireless links when performing an image transmission task. Even when errors happen in one or more links of the multi-link transmission, the receiving end can still obtain a reconstructed image without decoding error.

In addition, the embodiment of the present disclosure can be realized by means of a computer program product. For example, the computer program product can include a computer-readable storage medium. A computer program is stored in the computer-readable storage medium, which can perform related operation to realize the technical solution of the present disclosure described above when the computer program is executed by a computing device.

For example, FIG. 4 is a block diagram of a computer-readable storage medium 40 according to an example embodiment of the present disclosure. As shown in FIG. 4, the computer-readable medium 40 includes a program 410. The program 410, when executed by at least one processor, causes the at least one processor to perform following operations: time down-sampling an image sequence including multiple frames to form multiple subsequences, encoding the multiple subsequences to form multiple encoded subsequences, and selecting frames to be transmitted according to sizes of the frames in the multiple encoded subsequences and a bandwidth of each channel of multiple channels.

Alternatively, the program 410, when executed by at least one processor, causes the at least one processor to perform following operations: locating an earliest frame at the time position in each encoded subsequence and combining these encoded frames to form a group, repeating the operation sequentially to form multiple groups, and selecting frames to be transmitted in each group according to the sizes of the frames in each group and the bandwidth of each channel of the multiple channels.

One of ordinary skill in the art can understand that the computer-readable storage medium 40 of the embodiments of the present disclosure includes, but is not limited to, semiconductor storage medium, optical storage medium, magnetic storage medium, or any other computer-readable storage medium.

Methods and related devices of the present disclosure have been described above in connection with the embodiments. One of ordinary skill in the art can understand that the methods described above are merely exemplary. The methods of the present disclosure are not limited to the steps and orders above.

It should be understood that the above described embodiments of the present disclosure may be implemented by software, hardware, or a combination of both software and hardware. Such an arrangement of the present disclosure is typically provided as software, code, and/or other data structure arranged or encoded on a computer-readable storage medium such as an optical medium (e.g., CD-ROM), a floppy disk ,or a hard disk, other medium such as firmware or microcode on one or more ROM or RAM or PROM chips, or downloadable software images or shared database in one or more modules, etc. Software or firmware or this configuration can be installed on a computing device, so that one or more processors of the computing device can perform the technical solution described in connection with the embodiments of the present disclosure.

In addition, each functional module and various features of the device used in each embodiment of the present disclosure can be implemented or performed by circuitry, which is typically one or more integrated circuits. The circuitry designed to perform the various functions described in the present disclosure can include a general processor, a digital signal processor (DSP), an application-specific integrated circuit (ASIC) or general-purpose integrated circuit, a field programmable gate array (FPGA) or other programmable logic device, a discrete gate or transistor logic, a discrete hardware component, or any combination of the above. A general-purpose processor may be a microprocessor, or the processor may be an existing processor, controller, microcontroller, or state machine. The above general-purpose processor or each circuit may be configured by a digital circuit or may be configured by a logic circuit. In addition, the present disclosure can implement the advanced technology to obtain the integrated circuits, when the advanced technology can replace the current integrated circuits due to the development in the semiconductor technology.

The program executed by the device according to the disclosure can be a program that causes a computer to realize example functions of the present disclosure by controlling the central processor unit (CPU). The program or information processed by the program can be temporarily stored in a volatile memory (such as a random-access memory RAM), hard drive (HDD), non-volatile memory (such as flash memory), or other memory systems. The program for implementing the functions of the embodiments of the present disclosure can be recorded on a computer-readable recording medium. The corresponding functions can be realized by reading recorded programs on the recording medium and execute the programs on computers system. The so-called "computer system" here may be a computer system embedded in the device and may include an operating system or hardware (such as a peripheral device).

As above, the embodiments of the present disclosure are described in detail with reference to the drawings. However, the specific structure is not limited to the embodiments above, and the present disclosure also includes any design changes that do not deviate from the subject of the present disclosure. In addition, various modifications of the disclosure are possible within the scope of the claims, and embodiments obtained by appropriately combining the technical means disclosed in the different embodiments are also included in the technical scope of the present disclosure. Furthermore, the components having the same effects described in the above embodiments can be substituted for each other.

## Claims

1. A video data processing method comprising:
time down-sampling an image sequence to form multiple subsequences;
separately encoding the multiple subsequences to form multiple encoded subsequences; and
selecting frames to be transmitted according to sizes of respective frames in the multiple encoded subsequences and a bandwidth of each channel of multiple channels.

2. The method of claim 1, wherein selecting the frames to be transmitted includes:
finding an earliest frame in each encoded subsequence and combining the earliest frames to form a group;
repeating the operations sequentially to form multiple groups; and
selecting the frames to be transmitted in each group according to sizes of the frames in each group and the bandwidth of each channel of the multiple channels.

3. The method of claim 2, wherein the frames to be transmitted in each group are selected according to the following condition:
S≤T
wherein S is a total code stream size of the selected frames in the group and T is a total bandwidth of the multiple channels.

4. The method of claim 2, wherein the frames to be transmitted in each group are selected according to the following condition:
T-D≤S≤T+D
wherein S is a total code stream size of the selected frames in the group, T is a total bandwidth of the multiple channels, and D is a tolerance threshold.

5. The method of claim 3 or 4, wherein as many frames as possible in each group are selected for transmission.

6. The method of claim 3 or 4, wherein:
the multiple channels are sorted in a descending order of bandwidth;
the frames to be transmitted in each group are sorted in an ascending order of size; and
the sorted fames are matched with the sorted channels sequentially, so that as many frames as possible in each group are transmitted in a same channel.

7. An unmanned aerial vehicle (UAV) comprising:
an image device configured to capture an image sequence;
a processor configured to:
time down-sample the image sequence to form multiple subsequences;
encode the multiple subsequences separately to form multiple encoded subsequences; and
select frames to be transmitted according to sizes of respective frames in the multiple encoded subsequences and a bandwidth of each channel of multiple channels; and
a transmission circuit configured to transmit the selected frames.

8. The UAV of claim 7, wherein the processor is further configured to:
find an earliest frame in each encoded subsequence and combine the earliest frames to form a group;
repeat the operations sequentially to form multiple groups; and
select the frames to be transmitted in each group according the sizes of the frames in each group and the bandwidth of each channel of the multiple channels.

9. The UAV of claim 8, wherein the processor is configured to select the frames to be transmitted according to the following condition:
S≤T
wherein S is a total code stream size of the selected frames and T is a total bandwidth of the multiple channels.

10. The UAV of claim 8, wherein the processor is configured to select the frames to be transmitted according to the following condition:
T-D≤S≤T+D
wherein S is a total code stream size of the selected frames, T is a total bandwidth of the multiple channels, and D is a tolerance threshold.

11. The UAV of claim 9 or 10, wherein the processor is configured to select as many frames as possible in each group to be transmitted.

12. The UAV of claim 9 or 10, wherein the processor is configured to:
sort the multiple channels in a descending order of bandwidth;
sort the frames to be transmitted in each group in an ascending order of size; and
match the sorted frames to the sorted channels sequentially to transmit as many frames as possible in each group in a same channel.

13. A computer-readable storage medium storing a computer program that, when executed by at least one processor, causes the at least one processor to:
time down-sample an image sequence to form multiple subsequences;
encode the multiple subsequences to form multiple encoded subsequences; and
select frames to be transmitted according to sizes of respective frames in the multiple encoded subsequences and a bandwidth of each channel of multiple channels.

14. The computer-readable storage medium of claim 13, wherein the computer program causes the at least one processor to select the frames to be transmitted by:
finding an earliest frame in each encoded subsequence and combine the earliest frames to form a group;
repeat the operations sequentially to form multiple groups; and
select the frames to be transmitted in each group according to sizes of the frames in each group and the bandwidth of each channel of the multiple channels.

15. The computer-readable storage medium of claim 14, wherein the computer program causes the at least one processor to select the frames to be transmitted according to the following condition:
S≤T
wherein S is a total code stream size of the selected frames and T is a total bandwidth of the multiple channels.

16. The computer-readable storage medium of claim 14, wherein the computer program causes the at least one processor to select the frames to be transmitted according to the following condition:
T-D≤S≤T+D
wherein S is a total code stream size of the selected frames, T is a total bandwidth of the multiple channels, and D is a tolerance threshold.

17. The computer-readable storage medium of claim 15 or 16, wherein the computer program causes the at least one processor to select as many frames as possible in each group to be transmitted.

18. The computer-readable storage medium of claim 15 or 16, wherein the computer program causes the at least one processor to:
sort the multiple channels in a descending order of bandwidth;
sort the frames to be transmitted in an ascending order of size; and
match the sorted frames with the sorted channels to transmit as many frames as possible in each group in a same channel.
